# EUROPEAN PATENT SPECIFICATION

(11) **EP 2 684 797 B1**
(45) Date of publication and mention of the grant of the patent: **26.06.2019**
(21) Application number: 12757583.5
(22) Date of filing: 12.03.2012
(51) Int. Cl.: B64C 3/10, B64C 3/36, B64C 23/06

(54) **AIRPLANE WINGTIP DEVICE**
FLUGZEUGFLÜGELSPITZEN-VORRICHTUNG
DISPOSITIF DE POINTE D'AILE D'AÉRONEF

(30) Priority: 11.03.2011 CN 201110059438; 11.03.2011 CN 201110059442; 11.03.2011 CN 201110059421
(43) Date of publication of application: 15.01.2014
(73) Proprietor: Commercial Aircraft Corporation Of China Ltd, Shanghai 200120 (CN); Commercial Aircraft Corporation Of China Ltd Shanghai Aircraft Design and Research Institute, Shanghai 201210 (CN)
(72) Inventor: CHEN, Yingchun, Shanghai 201210 (CN); ZHANG, Miao, Shanghai 201210 (CN); LIU, Tiejun, Shanghai 201210 (CN); ZHANG, Meihong, Shanghai 201210 (CN); WANG, Junhong, Shanghai 201210 (CN); MA, Tuliang, Shanghai 201210 (CN); YU, Zhehui, Shanghai 201210 (CN); ZHOU, Feng, Shanghai 201210 (CN); ZHANG, Dongyun, Shanghai 201210 (CN)
(74) Representative: Bergmeier, Werner
(86) International application number: PCT/CN2012/072188
(87) International publication number: WO 2012/122925

(56) References cited:
- WO-A1-98/56654
- WO-A1-2007/018785
- CN-A- 101 228 067
- CN-A- 101 318 551
- CN-A- 101 687 543
- CN-A- 102 167 152
- CN-A- 102 167 153
- CN-A- 102 167 154
- DE-A1- 3 621 800
- DE-A1- 19 926 832
- GB-A- 2 130 159
- US-A- 2 743 888
- US-A- 4 671 473
- US-A1- 2007 262 205
- US-A1- 2010 084 516

## Description

### FIELD OF THE PRESENT INVENTION

The present invention relates to a wingtip device of the airplane wing.

### BACKGROUND OF THE PRESENT INVENTION

The lifting force which is needed by the airplane to maintain its normal flight is generated by the pressure difference between the upper and lower surfaces of the wing. Due to the existing of the pressure difference between the upper and lower surfaces, the air around the lower surface of the wing near the wingtip will move to the upper surface to form wingtip vortices, so that the pressure difference between the upper and lower surfaces of the wing near the wingtip area may be reduced, thus the lifting force in this area may be reduced accordingly.

Regarding the above problem, a winglet is generally arranged on the wingtip of the airplane wing. The main function of the winglet is to increase the effective aspect ratio without increasing the stretching length of the wing. As a result, the three dimensional effect of the wing is weakened, the induced drag is reduced, and the lifting force is increased, thus the rate of lift and drag is increased. Further, the winglet can also dissipate the wingtip vortices, and reduce the risk for the following small airplane.

However, once the winglet is added to the airplane wing, the weight of the wing is increased. Due to the addition of the winglet, the end structure of the wing becomes more complicated, and thus the weight is increased additionally. The winglet can cause the increasing of the bending moment and the shearing load of the wing root of the wing, as well as the weight of the structure of the wing. Moreover, if the winglet is designed badly, the airflow separation from the wing and flutter characteristics of the airplane become weak accordingly.

In the last decades, each developed aviation industry country in the world is always trying to develop the wingtip device and has designed different kinds of the wingtip devices.

The wingtip devices can be classified into two kinds depending on the shape therefore. One is wingtip fence. Such winglet generally has three sections, i.e., a mounting section, an arc transition section and a straight section. Such wingtip device has an obvious bending wing, and is practically used in the Boeing 747-400 airplane and AIRBUS A330 and A340 airplanes. Additionally, when the structures of Boeing 727, Boeing 757 or Boeing 767 airplane is changed, such wingtip device may also be installed.

The other one is triangle wingtip fence. Such wingtip fence is used in AIRBUS A320, A310 and A380 airplanes. Such wingtip device may be referred to as the standard form in AIRBUS airplanes.

Additionally, new Boeing airplanes such as Boeing 777, Boeing 787 and Boeing 747-8, all use raked winglet to replace the wingtip fence.

Although the upper reversed type winglet and the wingtip fence all have the significant drag reduction effect, the bending moment of both the winglet and the wingtip fence are relatively larger, which increases the structural weight thereof and affects the flutter characteristics of the airplane.

Thus, it is desired that the weight of the wingtip device can be reduced, the increase of the bending moment and the influence on the flutter characteristics caused by the installation of the wingtip device may be reduced, while the aerodynamic characteristics of the wingtip device can be maintained.

WO 2007/018785 A1 discloses a wingtip extension for use with an aircraft wing. The wingtip extension comprises a tapered wing section having an inboard end portion with a first chord length and an outboard end portion with a second chord length that is less than the first chord length. The inboard end portion is configured to be fixedly attached to a tip portion of the aircraft wing. A winglet is fixedly attached to the outboard end portion of the tapered wing section. The chord length of the single winglet at its inboard end is the same as the chord length of the outboard end of the tapered wing section.

### SUMMARY OF THE PRESENT INVENTION

Thus, the objective of the present invention is to provide a wingtip device, which can reduce the weight of the wingtip device while maintaining the aerodynamic characteristics of the wingtip device.

To achieve the above objective, the present invention provides an airplane wingtip device, comprising a transition part and a wingtip part, the inner end of the transition part being connected to the far end of an airplane wing, and the outer end of the transition part being connected to the wingtip part, wherein the wingtip part comprises a plurality of wingtip sections, each wingtip section comprising a wingtip and a wing root respectively, the wing root of the first wingtip section being connected to the outer end of the transition part, the wing root of the (n+1)^{th} wingtip section being located on the wingtip of the n^{th} wingtip section, and the chord length of the wing root of the (n+1)^{th} wingtip section being smaller than or equal to the chord length of the wingtip of the n^{th} wingtip section, wherein n>0.

In the present invention, the tip of each wingtip section of the airplane is referred to as "wingtip", and the bottom of each wingtip section is referred to as "wing root". Additionally, in the present invention, the wingtip section may be arranged at any position on the outside of the transition part, for example, the wingtip section may be aligned with the rear edge of the outer end of the transition part, or aligned with the leading edge of the outer end of the transition part, or arranged between the leading edge and the rear edge of the outer end of the transition part.

Preferably, the thickness of the (n+1)^{th} wingtip section is smaller than the thickness of the n^{th} wingtip section.

Preferably, the chord length of the wingtip of each wingtip section is smaller than the chord length of the wing root of each wingtip section. More preferably, each wingtip section has a decreasing chord length.

Preferably, the chord length of the wing root of the first wingtip section is smaller than or equal to the chord length of the outer end of the transition part.

Preferably, the chord length of the inner end of the transition part is larger than the chord length of the outer end of the transition part.

Preferably, the transition part has a decreasing chord length.

Preferably, the transition part has an upper curved surface and a lower curved surface which both are smooth curved surfaces.

Preferably, the transition part is smoothly connected to the far end of the airplane wing.

Preferably, the airplane wingtip device is formed integrally with the airplane wing.

Preferably, a rear edge line of the wingtip part is aligned with a rear edge line of the transition part.

Preferably, a starting end of the transition part of the wingtip device is located at a position having a length that is 85%-100% of the stretching length of the wing along a stretching direction.

Preferably, the chord length of the wing root of the first wingtip section of the wingtip part is 10%-100% of the chord length of the outer end of the transition part.

Preferably, a leading edge line of each wingtip section of the wingtip part is a conic segment, a spline, a straight line or a broken line segment. More preferably, the conic segment is a parabola, a hyperbola or an ellipse.

Furthermore, the present invention also provides an airplane wingtip device, comprising a transition part and a wingtip part, the inner end of the transition part being connected to the far end of an airplane wing, and the outer end of the transition part being connected to the wingtip part, wherein the wingtip part comprises a wingtip and a wing root, the wing root of the wingtip part being connected to the outer end surface of the transition part, and the chord length of the wing root being smaller than the chord length of the outer end surface of the transition part.

Preferably, the thickness of the wingtip part is smaller than that of the transition part.

Preferably, the chord length of the wingtip is smaller than that of the wing root of the wingtip part. More preferably, the wingtip part has a decreasing chord length.

Preferably, the chord length of the inner end of the transition part is larger than the chord length of the outer end of the transition part. More preferably, the transition part has a decreasing chord length.

Preferably, the transition part has an upper curved surface and a lower curved surface which both are smooth curved surfaces.

Preferably, the transition part is smoothly connected to the far end of the airplane wing.

Preferably, the airplane wingtip device is formed integrally with the airplane wing.

Preferably, a rear edge line of the wingtip part is aligned with a rear edge line of the transition part.

Preferably, a starting end of the transition part of the wingtip device is located at a position having a length that is 85%-100% of the stretching length of the wing along a stretching direction.

Preferably, the chord length of the wing root of the wingtip part is 10%-100% of the chord length of the outer end of the transition part.

Preferably, a leading edge line of the wingtip part is a conic segment, a spline, a straight line or a broken line segment. More preferably, the conic segment is a parabola, a hyperbola or an ellipse.

Because the wingtip device of the present invention is disposed in a stepped fashion, more than one discontinuity surface is added to the wingtip thereof, so that the wingtip vortices induced by the wingtip suppress each other, thereby reducing the strength of the vortices, and thus achieving drag reduction effect. In addition, the wing root of the present invention has a smaller bending moment increment, thus reducing the structural weight of the airplane and having less effect on the flutter properties.

### BRIEF DESCRIPTION OF THE DRAWINGS

- **Fig.1**: is a front view of one embodiment of the winglet with aligned rear edge according to the present invention;
- **Fig.2**: is a schematic view of the winglet of Fig.1;
- **Fig.3**: is a front view of one embodiment of the winglet with aligned leading edge according to the present invention;
- **Fig.4**: is a schematic view of the winglet of Fig.3;
- **Fig.5**: is a front view of another embodiment of the winglet according to the present invention, wherein the wingtip part in a stepped fashion is arranged in the middle portion;
- **Fig.6**: is a schematic view of the winglet of Fig.5; and
- **Fig.7**: shows another embodiment of the winglet with aligned rear edge according to the present invention, wherein the chord length of the wing root of the (n+1)^{th} wingtip section is equal to the chord length of the wingtip of the n^{th} wingtip section.

### DETAILED DESCRIPTION OF THE PREFERRED EMBODIMENTS

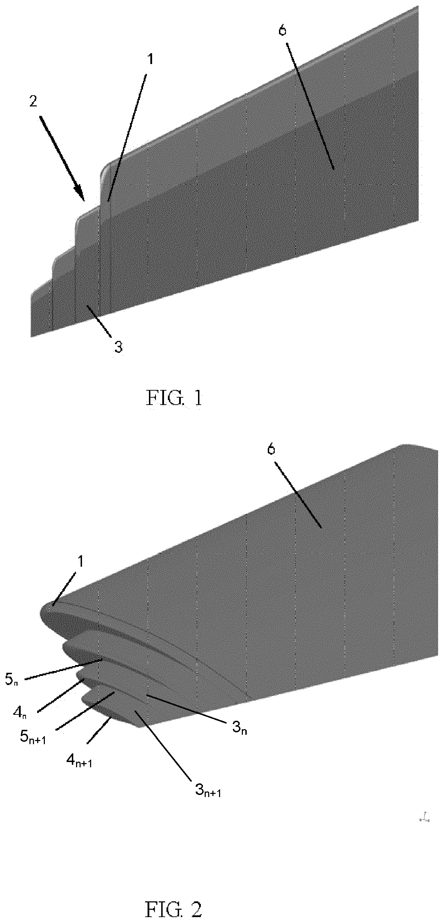

As shown in Figs. 1-2, in one embodiment of the present invention, the airplane wingtip device is disposed in a stepped fashion, and comprises a transition part 1 and a wingtip part 2. The inner end of the transition part 1 is connected to the far end of an airplane wing 6, and the outer end of the transition part 1 is connected to the wingtip part 2. The wingtip part comprises a plurality of wingtip sections 3ₙ, and each wingtip section 3ₙ comprises a wingtip 4ₙ and a wing root 5ₙ respectively. The wing root 5₁ of the first wingtip section 3ₗ is connected to the outer end of the transition part 1, and is aligned with the rear edge of the outer end of the transition part 1. The wing root 5ₙ₊₁ of the (n+1)^{th} wingtip section 3ₙ₊₁ is located on the wingtip 4ₙ of the n^{th} wingtip section 3ₙ and the chord length of the wing root 5ₙ₊₁ of the (n+1)^{th} wingtip section 3ₙ₊₁ is smaller than the chord length of the wingtip 4ₙ of the n^{th} wingtip section 3ₙ, wherein n>0. Additionally, as shown in Fig.1, the rear edge line of the wingtip part 2 is aligned with the rear edge line of the transition part 1.

In a preferable embodiment of the present invention, the thickness of the (n+1)^{th} wingtip section 3ₙ₊₁ is smaller than that of the n^{th} wingtip section 3ₙ. The chord length of the wingtip 4 of each wingtip section 3 is smaller than that of the wing root 5 of each wingtip section 3, and each wingtip section 3 has a decreasing chord length. The chord length of the wing root 5₁ of the first wingtip section 3₁ is smaller than or equal to the chord length of the outer end of the transition part 1. The chord length of the inner end of the transition part 1 is larger than the chord length of the outer end of the transition part 1, f and the transition part 1 has a decreasing chord length. The transition part 1 has an upper curved surface and a lower curved surface which both are smooth curved surfaces. The transition part 1 is smoothly connected to the far end of the airplane wing. The airplane wingtip device is formed integrally with the airplane wing.

In a preferable embodiment of the present invention, a staring end of the transition part 1 of the wingtip device is located at a position having a length that is 85%-100% of the stretching length of the wing along a stretching direction, and the chord length of the wing root 5₁ of the first wingtip section of the wingtip part 2 is 10%-100% of the chord length of the outer end of the transition part 1.

In another embodiment of the present invention, the airplane wingtip device is configured to have one single step, and comprises a transition part 1 and a wingtip part 2. The inner end of the transition part 1 is connected to the far end of an airplane wing 6, and the outer end of the transition part 1 is connected to the wingtip part. The wingtip part 2 comprises a wingtip 4 and a wing root 5. The wing root 5 of the wingtip part 2 is connected to the outer end surface of the transition part 1, and is aligned with the rear edge of the outer end of the transition part 1. The chord length of the wing root 5 is smaller than the chord length of the outer end surface of the transition part 1.

In addition, the leading edge line of each wingtip section 3 of the wingtip part 2 is a conic segment, a spline, a straight line or a broken line segment. More preferably, the conic segment is a parabola, a hyperbola or an ellipse. As shown in Fig.1, in one embodiment of the present invention, the leading edge of each wingtip section 3 of the wingtip part 2 is a conic segment.

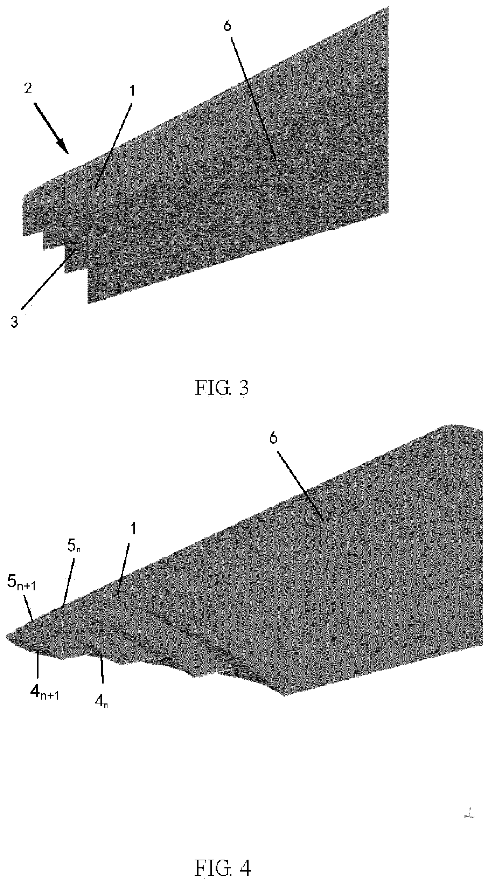

As shown in Figs.3-4, in another embodiment of the present invention, the wing root 5₁ of the first wingtip section 3₁ may also be aligned with the leading edge of the outer end of the transition part 1. Then, the leading edge line of the wingtip part 2 is aligned with the leading edge line of the transition part 1.

In addition, the rear edge line of each wingtip section 3 of the wingtip part 2 is a conic segment, a spline, a straight line or a broken line segment. More preferably, the conic segment is a parabola, a hyperbola or an ellipse. As shown in Fig.3, in one embodiment of the present invention, the rear edge line of each wingtip section 3 of the wingtip part 2 is a straight line.

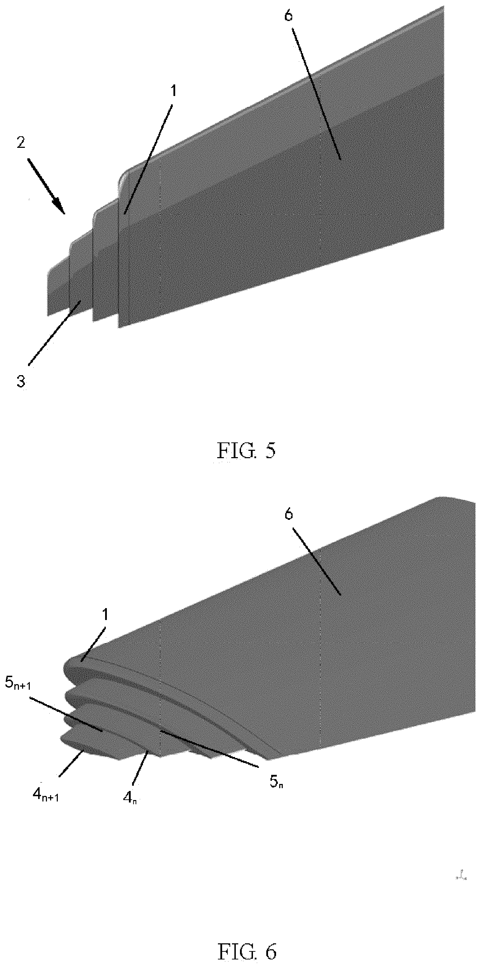

In addition, as shown in Figs.5-6, in another embodiment of the present invention, the wingtip part 2 may also be arranged in the middle portion of the outer end of the transition part 1. That is, the wing root 5₁ of the first wingtip section 3₁ is neither aligned with the leading edge of the outer end of the transition part 1 nor the rear edge of the outer end of the transition part 1.

Then, the leading edge line and the rear edge line of each wingtip section of the wingtip part 2 may be a conic segment, a spline, a straight line or a broken line segment. More preferably, the conic segment is a parabola, a hyperbola or an ellipse. The leading edge line and the rear edge line may be the same segments or different segments. As shown in Figs.5-6, the rear edge line of the wingtip section 3 of the wingtip part 2 is a straight line, and the leading edge line is a conic segment.

The configurations as shown in Figs.3-6 may also be used in the single step winglet, and it is unnecessary to go into details here since the arrangement may be similar to that in the above multiple-step winglet.

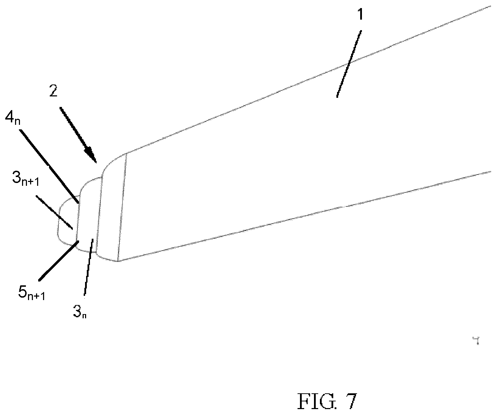

Further, as shown in Fig.7, in one embodiment, the chord length of the wing root 5ₙ₊₁ of the (n+1)^{th} wingtip section 3ₙ₊₁ is equal to the chord length of the wingtip 4ₙ of the nth wingtip section 3ₙ. In this case, the chord length is cut off at the connection part of each wingtip section so as to also form a stepped shape.

The above description has disclosed the technical contents and features of the present invention. However, the above embodiments are illustrative rather than limiting and it should be understood that the person skilled in the art may modify and change the above structures within the scope of the attached claims.

## Claims

1. An airplane wingtip device, comprising a transition part(1) and a wingtip part (2),
the inner end of the transition part (1) being connected to the far end of an airplane wing (6), and
the outer end of the transition part (1) being connected to the wingtip part (2),
wherein the wingtip part (2) comprises a wingtip (4) and a wing root (5), the wing root (5) of the wingtip part (2) being connected to the outer end surface of the transition part (1),
**characterized in that**
the wingtip part (2) comprises at least one wingtip section (3),
each wingtip section (3) comprising a wingtip (4) and a wing root (5) respectively,
the wing root (5) of the first wingtip section (3) being connected to the outer end of the transition part (1),
the chord length of the wing root (5) being smaller than the chord length of the outer end surface of the transition part (1) if the wingtip part (2) comprises only one wingtip section (3), and
the wing root (5) of the (n+1)^{th} wingtip section (3) being located on the wingtip (4) of the n^{th} wingtip section (3), and
the chord length of the wing root (5) of the (n+1)^{th} wingtip section (3) being smaller than or equal to the chord length of the wingtip (4) of the n^{th} wingtip section (3), wherein n>0.

2. The airplane wingtip device according to Claim 1, wherein the thickness of the (n+1)^{th} wingtip section (3) is smaller than that of the n^{th} wingtip section (3).

3. The airplane wingtip device according to Claim 1, wherein the chord length of the wingtip (4) of each wingtip section (3) is smaller than the chord length of the wing root (5) of each wingtip section (3).

4. The airplane wingtip device according to Claim 1, wherein the chord length of the wing root (5) of the first wingtip section (3) is smaller than or equal to the chord length of the outer end of the transition part (1).

5. The airplane wingtip device according to Claim 1, wherein the chord length of the inner end of the transition part (1) is larger than the chord length of the outer end of the transition part (1).

6. The airplane wingtip device according to Claim 4, wherein the transition part (1) has a decreasing chord length.

7. The airplane wingtip device according to Claim 1, wherein the transition part (1) is smoothly connected to the far end of the airplane wing (6).

8. The airplane wingtip device according to Claim 1, wherein the airplane wingtip device is formed integrally with the airplane wing (6).

9. The airplane wingtip device according to Claim 1, wherein a rear edge line of the wingtip part (2) is aligned with a rear edge line of the transition part (1).

10. The airplane wingtip device according to Claim 1, wherein the chord length of the wing root (5) of the first wingtip section (3) of the wingtip part (2) is 10%-100% of the chord length of the outer end of the transition part (1).

11. The airplane wingtip device according to Claim 1, wherein a leading edge line of each wingtip section (3) of the wingtip part (2) is a conic segment, a spline, a straight line or a broken line segment.

12. The airplane wingtip device according to Claim 1, wherein the thickness of the wingtip part (2) is smaller than that of the transition part (1) if the wingtip part (2) comprises only one wingtip section (3).

## Patentansprüche

1. Flugzeug-Tragflächenspitzenvorrichtung, umfassend einen Übergangsteil (1) und einen Tragflächenspitzenteil (2),
wobei das innere Ende des Übergangsteils (1) mit dem fernen Ende einer Flugzeugtragfläche (6) verbunden ist, und
das äußere Ende des Übergangsteils (1) mit dem Tragflächenspitzenteil (2) verbunden ist,
wobei der Tragflächenspitzenteil (2) eine Tragflächenspitze (4) und eine Tragflächenwurzel (5) des Tragflächenspitzenteils (2) umfasst, die mit der äußeren Endfläche des Übergangsteils (1) verbunden ist, **dadurch gekennzeichnet, dass**
der Tragflächenspitzenteil (2) mindestens einen Tragflächenspitzenabschnitt (3) umfasst, wobei jeder Tragflächenspitzenabschnitt (3) jeweils eine Tragflächenspitze (4) und eine Tragflächenwurzel (5) umfasst,
wobei die Tragflächenwurzel (5) des ersten Tragflächenspitzenabschnitts (3) mit dem äußeren Ende des Übergangsteils (1) verbunden ist,
die Sehnenlänge der Tragflächenwurzel (5) kleiner als die Sehnenlänge der äußeren Endfläche des Übergangsteils (1) ist, wenn der Tragflächenspitzenteil (2) nur einen Tragflächenspitzenabschnitt (3) umfasst, und
sich die Tragflächenwurzel (5) des (n+1)-ten Tragflächenspitzenabschnitts (3) an der Tragflächenspitze (4) des n-ten Tragflächenspitzenabschnitts (3) befindet, und
die Sehnenlänge der Tragflächenwurzel (5) des (n+1)-ten Tragflächenspitzenabschnitts (3) kleiner als die oder gleich der Sehnenlänge der Tragflächenspitze (4) des n-ten Tragflächenspitzenabschnitts (3) ist, wobei n>0.

2. Flugzeug-Tragflächenspitzenvorrichtung nach Anspruch 1, wobei die Dicke des (n+1)-ten Tragflächenspitzenabschnitts (3) kleiner als diejenige des n-ten Tragflächenspitzenabschnitts (3) ist.

3. Flugzeug-Tragflächenspitzenvorrichtung nach Anspruch 1, wobei die Sehnenlänge der Tragflächenspitze (4) jedes Tragflächenspitzenabschnitts (3) kleiner als die Sehnenlänge der Tragflächenwurzel (5) jedes Tragflächenspitzenabschnitts (3) ist.

4. Flugzeug-Tragflächenspitzenvorrichtung nach Anspruch 1, wobei die Sehnenlänge der Tragflächenwurzel (5) des ersten Tragflächenspitzenabschnitts (3) kleiner als die oder gleich der Sehnenlänge des äußeren Endes des Übergangsteils (1) ist.

5. Flugzeug-Tragflächenspitzenvorrichtung nach Anspruch 1, wobei die Sehnenlänge des inneren Endes des Übergangsteils (1) größer als die Sehnenlänge des äußeren Endes des Übergangsteils (1) ist.

6. Flugzeug-Tragflächenspitzenvorrichtung nach Anspruch 4, wobei der Übergangsteil (1) eine kleiner werdende Sehnenlänge aufweist.

7. Flugzeug-Tragflächenspitzenvorrichtung nach Anspruch 1, wobei der Übergangsteil (1) glatt mit dem fernen Ende der Flugzeugtragfläche (6) verbunden ist.

8. Flugzeug-Tragflächenspitzenvorrichtung nach Anspruch 1, wobei die Flugzeug-Tragflächenspitzenvorrichtung einstückig mit der Flugzeugtragfläche (6) ausgebildet ist.

9. Flugzeug-Tragflächenspitzenvorrichtung nach Anspruch 1, wobei eine Hinterkantenlinie des Tragflächenspitzenteils (2) mit einer Hinterkantenlinie des Übergangsteils (1) ausgerichtet ist.

10. Flugzeug-Tragflächenspitzenvorrichtung nach Anspruch 1, wobei die Sehnenlänge der Tragflächenwurzel (5) des ersten Tragflächenspitzenabschnitts (3) des Tragflächenspitzenteils (2) 10 % bis 100 % der Sehnenlänge des äußeren Endes des Übergangsteils (1) beträgt.

11. Flugzeug-Tragflächenspitzenvorrichtung nach Anspruch 1, wobei eine Vorderkantenlinie jedes Tragflächenspitzenabschnitts (3) des Tragflächenspitzenteils (2) ein konischer Abschnitt, ein Keil, eine Gerade oder ein unterbrochener Linienabschnitt ist.

12. Flugzeug-Tragflächenspitzenvorrichtung nach Anspruch 1, wobei die Dicke des Tragflächenspitzenteils (2) kleiner als diejenige des Übergangsteils (1) ist, wenn der Tragflächenspitzenteil (2) nur einen Tragflächenspitzenabschnitt (3) umfasst.

## Revendications

1. Dispositif d'extrémité d'aile d'aéronef, comprenant une partie de transition (1) et une partie d'extrémité d'aile (2),
l'extrémité intérieure de la partie de transition (1) étant reliée à l'extrémité lointaine d'une aile d'aéronef (6), et
l'extrémité extérieure de la partie de transition (1) étant reliée à la partie d'extrémité d'aile (2),
dans lequel la partie d'extrémité d'aile (2) comprend une extrémité d'aile (4) et une emplanture d'aile (5), l'emplanture d'aile (5) de la partie d'extrémité d'aile (2) étant reliée à la surface d'extrémité extérieure de la partie de transition (1),
**caractérisé en ce que**
la partie d'extrémité d'aile (2) comprend au moins une section d'extrémité d'aile (3), chaque section d'extrémité d'aile (3) comprenant respectivement une extrémité d'aile (4) et une emplanture d'aile (5), l'emplanture d'aile (5) de la section d'extrémité d'aile (3) étant reliée à l'extrémité extérieure de la partie de transition (1),
la longueur de corde de l'emplanture d'aile (5) est inférieure à la longueur de corde de la surface d'extrémité extérieure de la partie de transition (1) si la partie d'extrémité d'aile (2) comprend seulement une section d'extrémité d'aile (3), et l'emplanture d'aile (5) de la (n+1)^{ième} section d'extrémité d'aile (3) étant disposée sur l'extrémité d'aile (4) de la n^{ième} section d'extrémité d'aile (3), et
la longueur de corde de l'emplanture d'aile (5) de la (n+1)^{ième} section d'extrémité d'aile (3) étant inférieure ou égale à la longueur de corde de l'extrémité d'aile (4) de la n^{ième} section d'extrémité d'aile (3), où n>0.

2. Dispositif d'extrémité d'aile d'aéronef selon la revendication 1, dans lequel l'épaisseur de la (n+1)^{ième} section d'extrémité d'aile (3) est inférieure à celle de la n^{ième} section d'extrémité d'aile (3).

3. Dispositif d'extrémité d'aile d'aéronef selon la revendication 1, dans lequel la longueur de corde de l'extrémité d'aile (4) de chaque section d'extrémité d'aile (3) est inférieure à la longueur de corde de l'emplanture d'aile (5) de chaque section d'extrémité d'aile (3).

4. Dispositif d'extrémité d'aile d'aéronef selon la revendication 1, dans lequel la longueur de corde de l'emplanture d'aile (5) de la première section d'extrémité d'aile (3) est inférieure ou égale à la longueur de corde de l'extrémité extérieure de la partie de transition (1).

5. Dispositif d'extrémité d'aile d'aéronef selon la revendication 1, dans lequel la longueur de corde de l'extrémité intérieure de la partie de transition (1) est supérieure à la longueur de corde de l'extrémité extérieure de la partie de transition (1).

6. Dispositif d'extrémité d'aile d'aéronef selon la revendication 4, dans lequel la partie de transition (1) présente une longueur de corde décroissante.

7. Dispositif d'extrémité d'aile d'aéronef selon la revendication 1, dans lequel la partie de transition part (1) est reliée en continu à l'extrémité lointaine de l'aile (6) de l'aéronef.

8. Dispositif d'extrémité d'aile d'aéronef selon la revendication 1, dans lequel le dispositif d'extrémité d'aile d'aéronef est intégralement formé avec l'aile (6) de l'aéronef.

9. Dispositif d'extrémité d'aile d'aéronef selon la revendication 1, dans lequel une ligne de bordure arrière de la partie d'extrémité d'aile (2) est alignée avec une ligne de bordure arrière de la partie de transition (1).

10. Dispositif d'extrémité d'aile d'aéronef selon la revendication 1, dans lequel la longueur de corde de l'emplanture d'aile (5) de la première section d'extrémité d'aile (3) de la partie d'extrémité d'aile (2) est de 10%-100% de la longueur de corde de l'extrémité extérieure de la partie de transition (1).

11. Dispositif d'extrémité d'aile d'aéronef selon la revendication 1, dans lequel une ligne de bord d'attaque de chaque section d'extrémité d'aile (3) de la partie d'extrémité d'aile (2) est un segment conique, une spline, une ligne droite ou un segment de ligne discontinue.

12. Dispositif d'extrémité d'aile d'aéronef selon la revendication 1, dans lequel l'épaisseur de la partie d'extrémité d'aile (2) est inférieure à celle de la partie de transition (1) si la partie d'extrémité d'aile (2) comprend seulement une section d'extrémité d'aile (3).
